# EUROPÄISCHE PATENTSCHRIFT

(11) **EP 1 328 354 B1**
(45) Veröffentlichungstag und Bekanntmachung des Hinweises auf die Patenterteilung: **06.01.2010**
(21) Anmeldenummer: 01982277.4
(22) Anmeldetag: 12.09.2001
(51) Int. Cl.: B05D 1/00

(54) **VERFAHREN ZUR HERSTELLUNG EINER BESCHICHTUNG AUF PORÖSEN UND/ODER SAUGFÄHIGEN MATERIALIEN**
METHOD FOR PRODUCING A COATING ON POROUS AND/OR ADSORBENT MATERIALS
PROCEDE POUR PRODUIRE UN REVETEMENT SUR DES MATERIAUX POREUX ET/OU ADSORBANTS

(30) Priorität: 25.09.2000 DE 10047290
(43) Veröffentlichungstag der Anmeldung: 23.07.2003
(73) Patentinhaber: Bayer MaterialScience AG, 51368 Leverkusen (DE)
(72) Erfinder: WEIKARD, Jan, 51519 Odenthal (DE); FISCHER, Wolfgang, 40668 Meerbusch (DE); MÜLLER, Manfred, 41066 Mönchengladbach (DE)
(86) Internationale Anmeldenummer: PCT/EP2001/010514
(87) Internationale Veröffentlichungsnummer: WO 2002/024343

(56) Entgegenhaltungen:
- EP-A- 0 894 780
- EP-A- 1 174 401
- US-A- 5 684 079
- US-A- 5 712 035

## Beschreibung

Die Erfindung betrifft ein Verfahren zur Herstellung einer Beschichtung auf einem porösen und/oder saugfähigen Material durch strahlungsinduzierte Polymerisation eines flüssigen Beschichtungsmittels.

Strahlungshärtbare Beschichtungsmittel auf Basis niedrigviskoser Ester der (Meth)-Acrylsäure sind beispielsweise bekannt aus der DE-A 37 06 355. Solche Beschichtungsmittel mit einer dynamischen Viskosität typischerweise unter 1000 mPa s werden ohne Verwendung von Lösungsmitteln und mit Zusatz von Fotoinitiatoren und gegebenenfalls von Additiven durch verschiedene Verfahren wie z.B. eine Walzapplikation auf zu beschichtende Substrate aufgebracht und anschließend durch Einwirkung von UV-Strahlung gehärtet.

Die für die Applikation in dünnen Schichten wichtige niedrige Viskosität der Beschichtungsmittel ist von Nachteil, wenn der zu beschichtende Untergrund aus einem Material besteht, das poröse und/oder saugende Eigenschaften aufweist. Es kann dann zum Eindringen des flüssigen, niedrigviskosen Beschichtungsmittels in den Untergrund kommen, was zur Folge hat, dass bei der anschließenden Bestrahlung die eingedrungenen Teile des Beschichtungsmittels von der Strahlung nicht oder nicht vollständig erreicht werden und so nicht oder nur unvollständig gehärtet werden. Die ungehärteten, weiterhin flüssigen Bestandteile beeinflussen dann die Qualität der Beschichtung negativ. Es kommt dann u.a. zu einem dem Fachmann als "Ausschwitzen" bekannten Phänomen, bei dem flüssige Bestandteile den gehärteten Film durchwandern und an der Oberfläche der Beschichtung sichtbar werden. Dieser Effekt kann schon nach sehr kurzer Zeit im Bereich von Stunden oder erst nach längerer Zeit im Bereich von Monaten auftreten.

Aufgabe der vorliegenden Erfindung war es, ein Verfahren zur Herstellung einer Beschichtung auf einem porösen oder saugfähigen Material durch Auftragen des Beschichtungsmittels und anschließende Härtung durch UV-Strahlung bereitzustellen, bei dem es nicht zum Ausschwitzen ungehärteter Bestandteile kommt.

Es wurde gefunden, dass die Aufgabe durch bestimmte eigentlich als Thixotropiermittel gebräuchliche Additive, die zur Gruppe der Polyamide oder der oligomeren oder polymeren Fettsäureamide gehören, gelöst werden kann.

Gegenstand der Erfindung ist ein Verfahren zur Herstellung einer Beschichtung auf einem porösen und/oder saugfähigen Material durch Auftragen und anschließende strahlungsinduzierte Polymerisation eines flüssigen Beschichtungsmittels, das mindestens einen (Meth)Acryloylgruppen aufweisenden Bestandteil einer dynamischen Viskosität unter 2000 mPa s enthält, **dadurch gekennzeichnet, dass** das Beschichtungsmittel berechnet auf seinen nichtflüchtigen Anteil 0,1 - 10 Gew.% eines Zusatzstoffes enthält, ausgewählt aus der Gruppe der Polyamide und/oder der oligomeren oder polymeren Fettsäureamide.

Strahlenhärtbare, flüssige Beschichtungsmittel sind bekannt und beispielsweise beschrieben in P. K. T. Oldring (Ed.), Chemistry & Technology of UV & EB Formulations For Coatings, Inks & Paints, Vol. 2, 1991, SITA Technology, London, S. 31 - 235. Als Beispiele seien genannt Epoxyacrylate, Urethanacrylate, Polyesteracrylate sowie aminmodifizierte und unmodifizierte Polyetheracrylate. Solche Produkte sind kommerziell erhältlich und weisen je nach Zusammensetzung unterschiedliche Viskositäten von etwa 100 mPa s bis etwa 100.000 mPa s auf. Sie kommen alleine oder als Mischungen zum Einsatz.

Beschichtungsmittel mit hohen Viskositäten werden üblicherweise mit Verdünnungsmitteln gemischt, die bei der UV-Härtung ebenfalls (co)polymerisieren. Solche Verdünnungsmittel sind beschrieben in P. K. T. Oldring (Ed.), Chemistry & Technology of UV & EB Formulations For Coatings, Inks & Paints, Vol. 2, 1991, SITA Technology, London, S. 237 - 285. Als Beispiele seien genannt die Ester der Acrylsäure oder Methacrylsäure, bevorzugt der Acrylsäure der folgenden Alkohole. Einwertige Alkohole sind die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Weiterhin können alkoxylierte Derivate dieser Alkohole verwendet werden. Zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Dreiwertige Alkohole sind Glycerin oder Trimethylolpropan oder deren alkoxylierte Derivate. Bevorzugt wird propoxyliertes Glycerin. Als mehrwertige Alkohole können Alkohole wie Pentaerythrit oder Ditrimethylolpropan oder deren alkoxylierte Derivate verwendet werden.

Beschichtungsmittel für das erfindungsgemäße Verfahren enthalten mindestens einen solchen (Meth)Acryloylgruppen aufweisenden Bestandteil einer dynamischen Viskosität unter 2000 mPa s, bevorzugt unter 1000 mPa s und besonders bevorzugt unter 500 mPa s.

Die Beschichtungsmittel für das erfindungsgemäße Verfahren enthalten an sich bekannte Initiatoren, die eine radikalische Polymerisation nach Bestrahlen mit energiereicher Strahlung wie zum Beispiel UV-Licht auslösen können. Solche Fotoinitiatoren sind beispielsweise beschrieben in P. K. T. Oldring (Ed.), Chemistry & Technology of UV & EB Formulations For Coatings, Inks & Paints, Vol. 3, 1991, SITA Technology, London, S. 61 - 325. Sie werden in Mengen von 0,1 bis 10 Gew.-Teilen, bevorzugt 2 bis 7 Gew.-Teilen, besonders bevorzugt 3 bis 4 Gew.-Teilen bezogen auf das flüssige Beschichtungsmittel verwendet.

Weiterhin enthält das Beschichtungsmittel berechnet auf seinen nichtflüchtigen Anteil 0,1 - 10 Gew.%, bevorzugt 0,3 - 5 Gew.%, besonders bevorzugt 0,5% - 2 Gew.% eines Zusatzstoffes, ausgewählt aus der Gruppe der Polyamide oder der oligomeren oder polymeren Fettsäureamide. Polyamide im Sinne der Erfindung sind beispielsweise wachsartige Polyamid-Polymere und/oder Fettsäure-modifizierte Polyamide, die z.B. unter dem Namen Crayvallac Super^{®} (Lubrizol Coating Additives GmbH, Ritterhude, Deutschland) oder Disparlon^{®} 6200, 6500 oder 6600 (Fa. C. H. Erbslöh, Krefeld, Deutschland) erhältlich sind; Fettsäureamide sind beispielsweise beschrieben in der DE-A 31 35 183. Weiterhin sind oligomere oder polymere Fettsäureamide kommerziell verfügbar, z.B. Crayvallac^{®} MT und Crayvallac^{®} SF (amidmodifizierte, hydrierte Rizinusöl-Produkte, Lubrizol Coating Additives GmbH, Ritterhude, Deutschland). Die erfindungsgemäß beobachtete Wirkung dieser Produkte war überraschend, da viele andere Thixotropiermittel im erfindungsgemäßen Verfahren keine Wirkung zeigen und daher nicht geeignet sind.

Weiterhin kann das erfindungsgemäß hergestellte Beschichtungsmittel mit Hilfs- und Zusatzmitteln der unterschiedlichsten Art abgemischt werden. Hierzu gehören Füllstoffe, Pigmente, Farbstoffe, Glättmittel, Mattierungsmittel oder Verlaufsmittel, die in den üblichen Mengen eingesetzt werden. Weiterhin ist die Verwendung von im Sinne der radikalischen Polymerisation inerten Lösungsmitteln möglich. Das erfindungsgemäße Verfahren beinhaltet dann zwischen Beschichten und Härten noch ein Ablüften bzw. Verdampfen des Lösungsmittels aus der flüssigen Beschichtung.

Das erfindungsgemäße Verfahren ist geeignet zur Erzeugung von hochwertigen Beschichtungen auf saugfähigen und/oder porösen Substraten wie z.B. Papier, Karton, Leder, Textil, Holz, Holzwerkstoffen wie beispielsweise mitteldichten Faserplatten, keramischen oder mineralischen Werkstoffen und auch auf porösen Kunststoffen.

Das Auftragen des Beschichtungsmittels auf das zu beschichtende Material erfolgt mit den in der Lacktechnologie üblichen und bekannten Methoden wie Spritzen, Rakeln, Walzen, Gießen, Tauchen, Schleudern und Sprühen (Vakumat). Das Aushärten des flüssigen Beschichtungsmittels erfolgt durch Bestrahlen mittels ultravioletter Strahlung. Dazu wird das beschichtete Material beispielsweise unter einem Quecksilbermitteldruckstrahler herbewegt. Das Härten mittels UV-Strahlung erfolgt in bekannter Weise und ist z.B. beschrieben in P. K. T. Oldring (Ed.), Chemistry & Technology of UV & EB Formulations For Coatings, Inks & Paints, Vol. 1, 1991, SITA Technology, London, S. 167 - 269.

### Beispiele

Es wurden Beschichtungsmittel gemäß der folgenden Tabelle (Angaben in Gewichts-teilen) formuliert und durch Dispergieren homogenisiert. Die Beschichtungsmittel wurden mit einem Handrakel in einer Schichtstärke von ca. 30 µm auf Eichefurnier aufgetragen. Anschließend wurden die Platten unter einem Quecksilberhochdruckstrahler einer Leistung von 80 W pro cm Lampenlänge herbewegt. Es entstanden in jedem Fall harte, lösemittelbeständige Filme (Test durch 50 Doppelhübe mit einem mit Butylacetat getränktem Wattebausch). Zur Überprüfung des Ausschwitzverhaltens wurden die Filme angeschliffen und der Schleifstaub über Nacht auf dem Film bzw. Brett belassen. Am nächsten Morgen wurde die Feuchte des Schleifstaubs als Maß für das Ausschwitzen bewertet. Völlig trockener Schleifstaub erhielt die Note 0, stark feuchter Staub die Note 5.

| **Formulierung** [Gewichtsteile] | Vergleich | | | | Erfindungsgemäß | | | | | |
|---|---|---|---|---|---|---|---|---|---|---|
| Beispiele | 1 | 2 | 3 | 4 | 5 | 6 | 7 | 8 | 9 | 10 |
| Roskydal^{®} UA VP LS 2299 | 84 | | 84 | 84 | 84 | 84 | 84 | 84 | 84 | |
| Laromer^{®} PO 84 F | | 100 | | | | | | | | 100 |
| TPGDA | 16 | | 16 | 16 | 16 | 16 | 16 | 16 | | |
| DPGDA | | | | | | | | | 16 | |
| Esacure^{®} TZT | 2,5 | 2,5 | 2,5 | 2,5 | 2,5 | 2,5 | 2,5 | 2,5 | 2,5 | 2,5 |
| Byk^{®} 410 | | | 2 | | | | | | | |
| Aerosil^{®} 300 | | | | 2 | | | | | | |
| Crayvallac^{®} MT | | | | | 2 | | | | | |
| Crayvallac^{®} SF | | | | | | 2 | | | | |
| Crayvallac^{®} Super | | | | | | | 2 | | 2 | |
| Disparlon^{®} 6500 | | | | | | | | 2 | | 2 |
| **Prüfung** [Note] | | | | | | | | | | |
| Ausschwitzen 10,0 m/min | 3 | 5 | 4 | 3 | 0 | 0 | 0 | 1 | 0 | 0 |
| Ausschwitzen 20,0 m/min | 5 | 5 | 5 | 3 | 0 | 0 | 0 | 1 | 0 | 0 |
| Ausschwitzen 30,0 m/min | 5 | 5 | 5 | 3 | 1 | 1 | 0 | 1 | 0 | 0 |
| Ausschwitzen 40,0 m/min | 5 | 5 | 5 | 4 | 1 | 2 | 0 | 2 | 0 | 0 |

| | | | | | | | | | | |
|---|---|---|---|---|---|---|---|---|---|---|
| Formulierung: Angabe in Gewichts-Teilen Roskydal^{®} UA VP LS 2299 (Bayer AG, Leverkusen, Deutschland) - aminmodifiziertes Polyetheracrylat, Viskosität ca. 800 mPa s. Laromer^{®} POS4F (BASF AG, Ludwigshafen, Deutschland) - aminmodifiziertes Oligoetheracrylat, Viskosität ca. 1000 mPa s TPGDA - Tripropylenglykoldiacrylat DPGDA - Dipropylenglykoldiacrylat Esacure^{®} TZT (Lamberti, Aldizzate, Italien) - Fotoinitiator (modifiziertes Benzophenon) Byk^{®} 410 (Byk-Chemie, Wesel, Deutschland) - Lösung eines modifizierten Harnstoffs Aerosil^{®} 300 (Degussa-Hüls, Frankfurt, Deutschland) - pyrogene Kieselsäure Crayvallac^{®} MT und Crayvallac^{®} SF (Lubrizol Coating Additives, Ritterhude, Deutschland) - amidmodifizierte, hydrierte Rizinusöle Crayvallac^{®} Super (Lubrizol Coating Additives, Ritterhude, Deutschland) - Polyamidwachs Disparlon^{®} 6500 (C. H. Erbslöh, Krefeld, Deutschland) - fettsäuremodifiziertes Polyamid Es wurden verschiedene Bretter bei unterschiedlichen Bandgeschwindigkeiten (10, 20, 30, 40 m/min) gehärtet und das Ausschwitzverhalten geprüft:0 = beste Note, 5 = schlechteste Note. | | | | | | | | | | |

Die Beispiele zeigen deutlich, dass durch das erfindungsgemäße Verfahren (Bsp. 5 - 10) eine starke Reduzierung und oft sogar völlige Verhinderung des Ausschwitzens im Vergleich zu den Vergleichsverfahren (Bsp. 1 - 4) erreicht wird.

## Patentansprüche

1. Verfahren zur Herstellung einer Beschichtung auf einem porösen und/oder saugfähigen Material durch Auftragen und anschließende strahlungsinduzierte Polymerisation eines flüssigen Beschichtungsmittels, das mindestens einen (Meth)Acryloylgruppen aufweisenden Bestandteil einer dynamischen Viskosität unter 2000 mPa s enthält, **dadurch gekennzeichnet, dass** das Beschichtungsmittel berechnet auf seinen nichtflüchtigen Anteil 0,1 - 10 Gew.% eines Zusatzstoffes enthält, ausgewählt aus der Gruppe der Polyamide und/oder der oligomeren oder polymeren Fettsäureamide.

2. Verfahren nach Anspruch 1, **dadurch gekennzeichnet, dass** als poröses und/oder saugfähiges Material Papier eingesetzt wird.

3. Verfahren nach Anspruch 1, **dadurch gekennzeichnet, dass** als poröses und/oder saugfähiges Material Karton eingesetzt wird.

4. Verfahren nach Anspruch 1, **dadurch gekennzeichnet, dass** als poröses und/oder saugfähiges Material Textil eingesetzt wird.

5. Verfahren nach Anspruch 1, **dadurch gekennzeichnet, dass** als poröses und/oder saugfähiges Material Holz eingesetzt wird.

6. Verfahren nach Anspruch 1, **dadurch gekennzeichnet, dass** als poröses und/oder saugfähiges Material Holzwerkstoffe eingesetzt werden.

7. Verfahren nach Anspruch 1, **dadurch gekennzeichnet, dass** als poröses und/oder saugfähiges Material Faserplatten eingesetzt werden.

8. Verfahren nach Anspruch 1, **dadurch gekennzeichnet, dass** als poröses und/oder saugfähiges Material keramische Werkstoffe eingesetzt werden.

9. Verfahren nach Anspruch 1, **dadurch gekennzeichnet, dass** als poröses und/oder saugfähiges Material mineralische Werkstoffe eingesetzt werden.

10. Verfahren nach Anspruch 1, **dadurch gekennzeichnet, dass** als poröses und/oder saugfähiges Material poröse Kunststoffe eingesetzt werden.

## Claims

1. Process for the production of a coating on a porous and/or absorbent material by the application and subsequent radiation-induced polymerization of a liquid coating agent containing at least one constituent with (meth)acryloyl groups which has a dynamic viscosity below 2000 mPa s, **characterized in that,** calculated on the basis of its non-volatile fraction, the coating agent contains 0.1 - 10 wt.% of an additive selected from the group comprising polyamides and/or oligomeric or polymeric fatty acid amides.

2. Process according to Claim 1, **characterized in that** paper is used as the porous and/or absorbent material.

3. Process according to Claim 1, **characterized in that** cardboard is used as the porous and/or absorbent material.

4. Process according to Claim 1, **characterized in that** textile is used as the porous and/or absorbent material.

5. Process according to Claim 1, **characterized in that** wood is used as the porous and/or absorbent material.

6. Process according to Claim 1, **characterized in that** ligneous materials are used as the porous and/or absorbent material.

7. Process according to Claim 1, **characterized in that** fibreboards are used as the porous and/or absorbent material.

8. Process according to Claim 1, **characterized in that** ceramic materials are used as the porous and/or absorbent material.

9. Process according to Claim 1, **characterized in that** mineral materials are used as the porous and/or absorbent material.

10. Process according to Claim 1, **characterized in that** porous plastics are used as the porous and/or absorbent material.

## Revendications

1. Procédé pour produire un revêtement sur un matériau poreux et/ou absorbant par application puis polymérisation induite par rayonnement d'un agent de revêtement liquide qui contient au moins un constituant comportant des groupes (méth)acryloyle d'une viscosité dynamique inférieure à 2 000 mPa.s **caractérisé en ce que** l'agent de revêtement contient, calculé par rapport à sa fraction non volatile, 0,1-10 % en poids d'un additif choisi dans le groupe des polyamides et/ou des amides d'acides gras oligomères ou polymères.

2. Procédé selon la revendication 1 **caractérisé en ce que** du papier est utilisé comme matériau poreux et/ou absorbant.

3. Procédé selon la revendication 1 **caractérisé en ce que** du carton est utilisé comme matériau poreux et/ou absorbant.

4. Procédé selon la revendication 1 **caractérisé en ce qu'**un textile est utilisé comme matériau poreux et/ou absorbant.

5. Procédé selon la revendication 1 **caractérisé en ce que** du bois est utilisé comme matériau poreux et/ou absorbant.

6. Procédé selon la revendication 1 **caractérisé en ce que** des matériaux dérivés du bois sont utilisés comme matériau poreux et/ou absorbant.

7. Procédé selon la revendication 1 **caractérisé en ce que** des panneaux de fibres sont utilisés comme matériau poreux et/ou absorbant.

8. Procédé selon la revendication 1 **caractérisé en ce que** des matériaux céramiques sont utilisés comme matériau poreux et/ou absorbant.

9. Procédé selon la revendication 1 **caractérisé en ce que** des matériaux minéraux sont utilisés comme matériau poreux et/ou absorbant.

10. Procédé selon la revendication 1 **caractérisé en ce que** des matières synthétiques poreuses sont utilisées comme matériau poreux et/ou absorbant.
